# EUROPÄISCHE PATENTSCHRIFT

(11) **EP 1 072 860 B1**
(45) Veröffentlichungstag und Bekanntmachung des Hinweises auf die Patenterteilung: **08.05.2002**
(21) Anmeldenummer: 00115602.5
(22) Anmeldetag: 20.07.2000
(51) Int. Cl.: G01B 11/06, B26D 3/08, B60R 21/20

(54) **Vermessen der Restwandstärke eingeschnittener dünner flexibler Airbag-Abdeckmaterialien mittels gekrümmter Haltebacken**
Measuring the remaining thickness of incised thin flexible airbag covering materials using bent jaws
Mesure de l'épaisseur du matériaux de recouvrement d'airbag mince et flexible restant après incision utilisant des machoires courbées

(30) Priorität: 27.07.1999 DE 19935244
(43) Veröffentlichungstag der Anmeldung: 31.01.2001
(73) Patentinhaber: Gaubatz, Heinz, 63128 Dietzenbach (DE)
(72) Erfinder: Gaubatz, Heinz, 63128 Dietzenbach (DE)
(74) Vertreter: KEIL & SCHAAFHAUSEN

(56) Entgegenhaltungen:
- WO-A-99/01317
- DE-A- 4 344 523
- DE-A- 19 654 452
- US-A- 5 883 356

## Beschreibung

Die Erfindung betrifft ein Verfahren und eine Vorrichtung zum Vermessen der Restwandstärke dünner flexibler Materialien nach das Material nicht vollständig durchtrennenden Einschnitten oder dgl. Hautschwächungen.

Die Dicke dünner flexibler Materialien wird häufig mit mechanischen Messmethoden bestimmt. So wird bei Mikrometerschrauben das Material zwischen zwei kleinflächigen Messfühlern eingeklemmt, deren Abstand an der Stellschraube mikrometergenau ablesbar ist. Solche mechanischen Messinstrumente sind jedoch nicht anwendbar, wenn statt der Gesamtdicke des Materials lediglich die verbleibende Restwandstärke nach das Material nicht vollständig durchtrennenden Einschnitten gemessen werden soll. Als Restwandstärke ist hierbei der senkrecht gemessene Abstand zwischen dem tiefsten. Punkt des Einschnittes oder der Hautschwächung und dem höchsten Punkt der intakten Materialoberfläche definiert. Da es mit mechanischen Abtastköpfen in der Regel nicht möglich ist, den tiefsten Punkt des Einschnittes zuverlässig zu erreichen, werden für derartige Messungen optische Verfahren angewendet, bei welchen die Restwandstärke mit einer in einem Mikroskop angebrachten Längenskala abgeschätzt wird. Allerdings ist hier zum einen die Genauigkeit durch die Skalenauflösung begrenzt und zum anderen lässt sich die Tiefe des Einschnittes häufig nicht genau erkennen. Auch bei zusätzlichem Einfärben des Einschnittes besteht die Möglichkeit, dass die Farbe nicht bis zum tiefsten Punkt des Einschnittes vordringt, so dass eine ungenaue Restwandstärke bestimmt wird. Bei dem Versuch, den Einschnitt durch Aufklappen um die Schnittlinie zu verdeutlichen, besteht die Gefahr, dass der Einschnitt durch die Überdehnung weiter einreißt, so dass eine Bestimmung der tatsächlichen Schnitt-Tiefe nicht mehr möglich ist.

Ein konkretes Bedürfnis für die exakte Bestimmung der Restwandstärke einer Kunststoffhaut ergibt sich beispielsweise bei Bezugshäuten für die Innenverkleidung der Armaturenbretter von Automobilen. Diese Bezugshäute, die üblicherweise im Slush-Verfahren hergestellt werden, decken u.a. die Öffnungen für Airbags ab. Im Falle eines Unfalls muss der Airbag zum Aufblasen die Bezugshaut zerstören können, ohne dass seine Funktion beeinträchtigt wird. Hierzu werden an den entsprechenden Stellen in der Bezugshaut Materialschwächungen vorgesehen, so dass die Bezugshaut beim Auslösen des Airbags in definierter Weise aufreißt. Aus der DE-U 298 13 528 der Anmelderin ist eine Schneidvorrichtung bekannt, mit der auf der Unterseite der Bezugshaut Einschnitte aufgebracht werden, wobei eine definierte Restwandstärke verbleibt. Da es sich um Sicherheitstechnik handelt, muss die Restwandstärke der Bezugshäute an den Einschnitten jedoch durch Kontrollen genau überprüfbar sein.

In der DE-A1-4 344 523 betrachtet eine Video Kamera den durch Krümmung erzeugten Spalt von oben.

Aufgabe der Erfindung ist es daher, ein Verfahren und eine Vorrichtung vorzuschlagen, mit der die Restwandstärke genau und reproduzierbar bestimmt werden kann.

Diese Aufgabe wird mit der Erfindung im wesentlichen durch ein Verfahren gelöst, bei dem eine Messprobe des Materials zwischen Haltebacken einer Haltevorrichtung eingelegt wird, bei dem der Einschnitt durch die gekrümmte Form von Auflageflächen der Haltebacken um ein festgelegtes Maß auseinandergezogen wird, bei dem die die Messprobe haltenden Haltebacken mit einem einstellbaren Druck gegeneinander gepresst werden, bei dem der Einschnitt der Messprobe in der Fokalebene einer optischen Vergrößerungseinrichtung positioniert wird und bei dem die Restwandstärke durch Verschiebung der Haltebacken mit der Messprobe relativ zu der optischen Vergrößerungseinrichtung und Bestimmung des Verschiebeweges ermittelt wird. Durch die Krümmung der Messbacken wird das zu vermessende Material im Vergleich zum entspannten Zustand definiert verformt, um den Einschnitt besser sichtbar zu machen. Dabei ist darauf zu achten, dass das Material im Schnittbereich nicht überdehnt wird, weil dadurch der Einschnitt weiter einreißen könnte und das Messergebnis verfälscht würde. Da die Messprobe durch die Haltebacken mit einem definierten Druck gehalten wird, kann außerdem sichergestellt werden, dass das Material nicht komprimiert und dadurch die Messung verfälscht wird.

Gemäß einer bevorzugten Ausgestaltung der Erfindung entspricht hierbei der Anpressdruck der Haltebacken im wesentlichen einem Haltedruck beim Schneiden des Materials in einer Schneidvorrichtung, wie sie aus der DE-U 298 13 528 bekannt ist.

Um zu vermeiden, dass die Messung durch Beschädigungen im Randbereich der Messprobe verfälscht wird, wird die Messprobe in Weiterbildung der Erfindung vor der Messung in der Fokalebene quer zur Richtung des Einschnittes abgeschnitten. An der frischen Schnittkante kann dann eine genaue Messung der Restwandstärke durchgeführt werden.

Die Aufgabe wird ferner durch eine Vorrichtung zum Vermessen der Restwandstärke dünner flexibler Materialien gelöst, die eine Haltevorrichtung mit einander gegenüberliegenden Haltebacken zur Aufnahme einer Messprobe des Materials aufweist, wobei die Haltebacken komplementär gekrümmte Auflageflächen haben, eine Druckerzeugungseinrichtung zur Aufbringung eines definierten Anpressdruckes der Haltebacken, eine optische Vergrößerungseinrichtung mit einer Fokalebene, in der ein zu untersuchender Einschnitt oder dgl. Hautschwächung des Materials positionierbar ist, und eine Verschiebungseinrichtung zur Verschiebung der Haltebacken relativ zu der optischen Vergrößerungseinrichtung. Die Messprobe liegt bei der Messung plan auf den Auflageflächen der Messbacken auf, so dass die Messprobe großflächig festgeklemmt und nicht punktuell durch einen Messkopf zusammengedrückt und verformt wird. Vielmehr wird der Haltedruck gleichmässig verteilt und die Messprobe ist reproduzierbar fixiert. Durch eine relative Verschiebung der Haltebacken mit der Messprobe und der optischen Vergrößerungseinrichtung lässt sich die Restwandstärke an dem Verschiebeweg genau ablesen.

Gemäß einer bevorzugten Ausführungsform ist die Haltevorrichtung in einer Messebene senkrecht zu der optischen Achse der Vergrößerungseinrichtung verschiebar und/oder drehbar gelagert. Somit vollzieht die Haltevorrichtung mit der Messprobe den Verschiebeweg, während die optische Vergrößerungseinrichtung feststeht. Auch kann hierdurch die Messprobe relativ zur Messrichtung genau ausgerichtet werden. Selbstverständlich ist es auch möglich, dass statt der Haltevorrichtung die optische Vergrößerungseinrichtung verschoben wird.

Erfindungsgemäß ist mindestens eine der Haltebacken relativ zu den übrigen Haltebacken verschiebbar, um das Anpressen der Messprobe zu gewährleisten. Ein Führungsmechanismus gewährleistet, dass sich die Messproben einfach aus der Messvorrichtung entnehmen und in definierter Weise neu einlegen lassen, ohne dass eine Verkantung der Messbacke befürchtet werden muss. Durch die Fixierung, die beispielsweise durch eine Feststellschraube oder einen Rastmechanismus erfolgen kann, wird eine Verschiebung der Messbacke während des Messvorgangs verhindert.

Die Messbacken sind vorzugsweise austauschbar, um die Vorrichtung einfach an unterschiedliche Probenformen und - materialen anpassen zu können.

Bei einer besonders bevorzugten Ausgestaltung der Erfindung weist die optische Vergrößerungseinrichtung ein Mikroskop mit einer Strichplatte mit Fadenkreuz oder dgl. Markierung auf, wobei das Objektiv vorzugsweise einen hohen Vergrößerungsfaktor und das Okular einen niedrigen Vergrößerungsfaktor aufweist. Auf diese Weise können Winkelfehler bei der Messung vermieden werden. Bei einer typischen Ausführungsform ergibt ein Vergrößerungsfaktor in der Größenordnung von 30 einen optimalen Kompromiss zwischen Größe der Bildausschnittes und Genauigkeit der Messung.

Zur kontrastreichen Ausleuchtung umfasst die optische Vergrößerungsvorrichtung erfindungsgemäß eine Lichtquelle hoher Beleuchtungsstärke, beispielsweise 5 Mio. Lux, wobei die Lichtquelle auf die Messprobe ausrichtbar und fokussierbar ist. Hierdurch kann eine besonders plastische Ausleuchtung der Messprobe erreicht werden.

Die erfindungsgemäße Vorrichtung weist ferner ein Messer oder dgl. Schneidvorrichtung auf, das insbesondere in der Fokalebene der optischen Vergrößerungsvorrichtung senkrecht zur Messprobe führbar ist. Es bietet sich an, das Messer schwenkbar zu lagern. Mit dem Messer kann die Messprobe unmittelbar vor dem Messen noch einmal geschnitten werden, um zu gewährleisten, dass der zu überprüfende Abschnitt der Messprobe beschädigungsfrei ist.

Weiterbildungen, Vorteile und Anwendungsmöglichkeiten der Erfindung ergeben sich auch aus der nachfolgenden Beschreibung eines Ausführungsbeispiels und der Zeichnung.

Es zeigen:

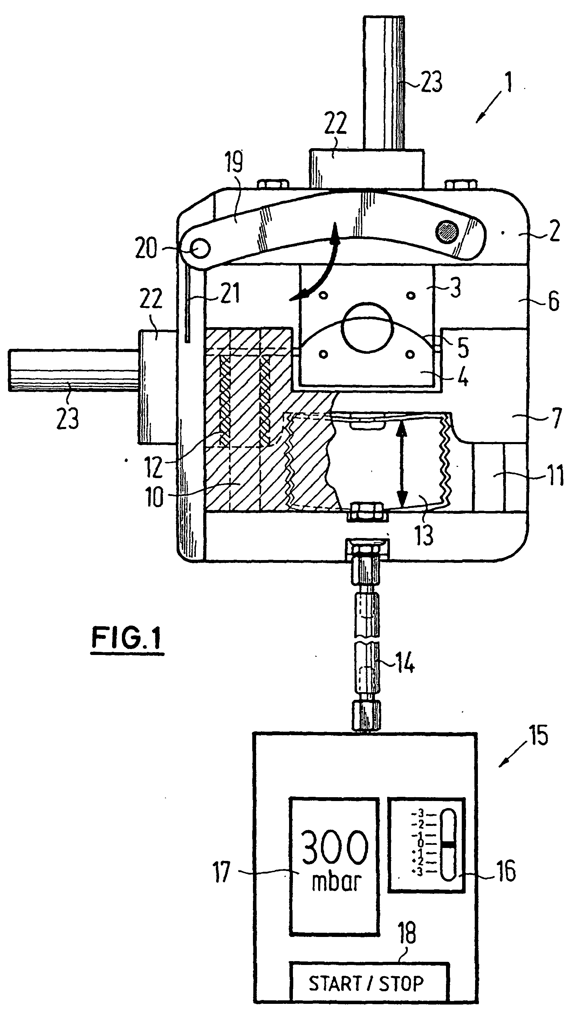

- Fig. 1: eine teilweise aufgebrochene Seitenansicht der erfindungsgemäßen Vorrichtung,
- Fig. 2: in vergrößerter Darstellung einen Ausschnitt der Vorrichtung gemäß Fig. 1 entsprechend dem Abbild einer eingespannten Messprobe in einer optischen Vergrößerungseinrichtung und
- Fig. 3: eine Detailansicht der Haltebacken der Vorrichtung gemäß Fig. 1.

Die in der Zeichnung dargestellte Messvorrichtung 1 zur Ermittlung der Restwandstärke RW dünner flexibler Materialien weist eine Haltevorrichtung 2 mit zwei Haltebacken 3, 4 auf, zwischen denen eine Messprobe 5 des zu untersuchenden Materials aufgenommen werden kann.

Die Haltebacken 3, 4 sind auf einem festen Wechselbackenträger 6 bzw. einem beweglichen Wechselbackenträger 7 angeordnet und weisen komplementär zueinander geformte gekrümmte Auflageflächen 8, 9 zur Aufnahme der Messprobe 5 auf.

Der bewegliche Wechselbackenträger 7 wird über Führungsstangen 10, 11 und Linearlager 12 geführt. Die Bewegung des beweglichen Wechselbackenträgers 7 wird über ein insbesondere pneumatisches Druckelement 13 induziert, das über eine Druckluftzufuhrleitung 14 mit einer Druckerzeugungseinheit 15 verbunden ist. In der Druckerzeugungseinheit 15 kann der Anpressdruck der beweglichen Haltebacke 4 zur Halterung der Messprobe 5 exakt eingestellt werden. Hierzu sind an der Druckerzeugungseinheit 15 ein Druckvorwahlschalter 16 und ein Anzeigefeld 17 vorgesehen, an dem der tatsächlich beaufschlagte Druck angezeigt wird. Über einen Schalter 18 kann die Druckbeaufschlagung gestartet bzw. beendet werden.

An der Haltevorrichtung 2 ist ein Messer 19 um eine Achse 20 drehbar gelagert, wobei es durch eine Feder 21 vorgespannt ist. Beim Schwenken des Messers 19 um die Achse 20 fährt das Messer 19 an den Haltebacken 3, 4 vorbei und schneidet eine zwischen den Haltebacken 3, 4 eingeklemmte Messprobe 5 auf der Höhe der Oberflächen der Backen 3, 4, insbesondere in der Fokalebene einer optischen Vergrößerungseinrichtung, ab.

Die Haltevorrichtung 2 ist auf einem nicht näher dargestellten Messtisch, insbesondere einem Kreuztisch eines Messmikroskopes angeordnet und über senkrecht zueinander angeordnete Linearstellglieder 22 definiert verstellbar. Die Linearstellglieder sind mit analog oder digital ablesbaren Messschrauben 23 oder dgl. verbunden.

Das als optische Vergrößerungseinrichtung dienende, nicht näher dargestellte Messmikroskop weist ein Okular mit insbesondere 15-facher Vergrößerung und ein Objektiv mit insbesondere 2-facher Vergrößerung auf. Ferner ist eine Lichtquelle, insbesondere eine Kaltlichtquelle mit einer Lichtstärke von beispielsweise 7,2 Mio. Lux vorgesehen, wobei die optimale Ausleuchtung des Messausschnittes über zweiarmige Schwanenhals-Lichtleiter erfolgen kann.

Eine Messprobe 5, deren Restwandstärke in der zuvor beschriebenen Messvorrichtung 1 ermittelt werden soll, wird vorzugsweise mit einer dafür angefertigten Schablone oder einer Stanzvorrichtung erstellt und weist festgelegte Abmessungen, bspw. etwa 40 mm x 12 mm auf. Der zu vermessende Einschnitt 25 sollte sich vorzugsweise senkrecht zu den Schnittkanten der Messprobe 5 erstrecken, so dass die Längsoder Stirnseiten der Messprobe 5 senkrecht zum Einschnitt 25 verlaufen. An den Längs- oder Stirnseiten (Schnittkanten) der Messprobe 5 wird dann die Vermessung der Restwandstärke vorgenommen. Dazu wird eine Längs- oder Stirnseite der Messprobe 5 als Anlage an der als Fixiervorrichtung dienenden Haltevorrichtung 3 genutzt und liegt bspw. auf einer Höhenpositionierung 30 der Haltebacken 3, 4 auf, die die Funktion von Spannbacken übernehmen. Die gegenüberliegende Längs- oder Stirnseite wird in der Messvorrichtung 1 mit dem Messer 19 so beschnitten, dass die mit der Fokalebene zusammenfallende Beschnittebene (Schnittkante) der Höhe der Haltebackenoberseite entspricht. Dieser zusätzliche Beschnitt der Messprobe 5 innerhalb der Messvorrichtung 1 dient dazu, den Tiefenschärfebereich der Messprobe 5 auf das gleiche Niveau wie die Oberfläche der Haltebacken 3, 4 zu bringen. In bestimmten Anwendungsfällen kann es aber auch sinnvoll sein, dass die Oberfläche der Haltebacken 3, 4 nicht mit der Beschnittebene und/oder der Fokalebene zusammenfällt.

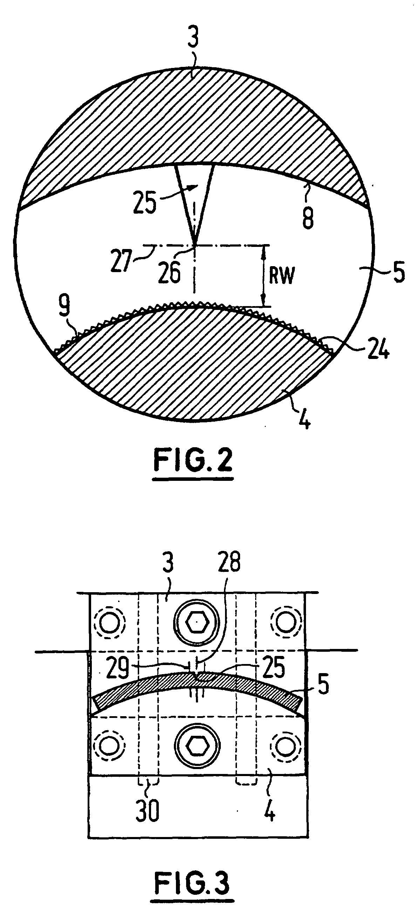

In Fig. 2 ist der mit dem Messmikroskop erfassbare Auschnitt A, wie er im Okular der Vergrößerungseinrichtung sichtbar ist, dargestellt. Zwischen der festen Haltebacke 3 und der beweglichen Haltebacke 4 ist die Messprobe 5 eingeklemmt, wobei sie auf den Auflageflächen 8, 9 der Haltebacken 3, 4 plan aufliegt. Die an der beweglichen Haltebacke 4 anliegende Oberfläche der Messprobe 5 weist eine Gravur oder Narbung 24 auf. An der der festen Haltebacke 3 zugewandten Seite der Messprobe 5 ist ein Einschnitt 25 zu erkennen, der durch die gekrümmte Form der Haltebacken 3, 4 von seinem tiefsten Einschnittpunkt 26 nach außen geöffnet ist. Ausgerichtet auf den tiefsten Punkt 26 des Einschnittes 25 ist ein Fadenkreuz 27 der optischen Vergrößerungseinrichtung.

Zum exakten Ausmessen der Restwandstärke RW wird der Messtisch der Messvorrichtung 1 durch Verstellen der Messschraube 23 des Linearsteligliedes 22 so lange in vertikaler Richtung verschoben, bis die horizontale Linie des Fadenkreuzes 27 tangential an der Auflagefläche 9 der beweglichen Haltebacke 4 anliegt. Der an der Messschraube 23 ablesbare Verschiebeweg entspricht nun genau der zu ermittelnden Restwandstärke RW. Um Messungenauigkeiten aufgrund der Gravur bzw. Narbung 24 der Messprobe 5 zu vermeiden, wird die Auflagefläche 9 der Backe 4 als Referenzpunkt für die Oberfläche der Messprobe 5 verwendet.

Die Messprobe 5 wird hierbei durch die bewegliche Haltebacke 4 mit genau dem Druck gehalten, der auch als Ansaugdruck beim Schneiden des Materials in der aus der DE-U 298 13 528 bekannten Schneidvorrichtung zum Ansaugen des Materials verwendet wird. Vorzugsweise liegt der Anpressdruck unter 1 bar, insbesondere bei 0,2 bis 0,6 bar, um eine die Dickenmessung beeinträchtigende Komprimierung des Materials zu vermeiden.

Beim Einlegen der Messprobe 5 in die Haltevorrichtung 2 ist darauf zu achten, dass der Einschnitt 25 vorzugsweise senkrecht zur Oberfläche der Haltebacken 3, 4 ausgerichtet ist und die Schnittmitte des Einschnitts 25 deckungsgleich an einer in Fig. 3 gezeigten Positioniermarkierung 28 der Haltebacken 3, 4 anliegt. Die maximale Abweichung des Einschnitts 25 von der Positioniermarkierung 28 ist durch Toleranzmarkierungen 29 rechts und links der Positioniermarkierung 28 gekennzeichnet. Bezogen auf den Mittelpunkt der beweglichen Haltebacke 4 sollten die durch die Toleranzmarkierung 29 angezeigten Toleranzgrenzen bei einem typischen Krümmungsradius der Haltebacke 4 von etwa 30 mm +/- 2° betragen, um eine genaue Messung erreichen zu können.

Mit der erfindungsgemäßen Vorrichtung ist es möglich, die Restwandstärke dünner flexibler Materialien genau und reproduzierbar zu messen, wobei durch die leichte Öffnung des Einschnittes durch die gekrümmten Haltebacken eine gute Erkennbarkeit der Schnittiefe gewährleistet ist, ein Einreißen des Einschnittes jedoch verhindert wird.

## Patentansprüche

1. Verfahren zur Vermessung der Restwandstärke (RW) dünner flexibler Materialien nach das Material nicht völlig durchtrennenden Einschnitten oder dgl. Hautschwächungen, wobei eine Messprobe (5) des Materials zwischen Haltebacken (3, 4) einer Haltevorrichtung (2) eingelegt wird, dass der Einschnitt (25) durch die gekrümmte Form von Auflageflächen (8, 9) der Haltebacken (3, 4) um ein festgelegtes Maß auseinandergezogen wird, dass die die Messprobe (5) haltenden Haltebacken (3, 4) mit einem einstellbaren Druck gegeneinandergepresst werden, dass der Einschnitt (25) der Messprobe (5) in der Fokalebene einer optischen Vergrößerungseinrichtung positioniert wird und dass die Restwandstärke (RW) durch Verschiebung der Haltebacken (3, 4) mit der Messprobe (5) relativ zu der optischen Vergrößerungseinrichtung und Bestimmung des Verschiebeweges ermittelt wird.

2. Verfahren nach Anspruch 1, wobei der Anpressdruck der Haltebacken (3, 4) im wesentlichen einem Haltedruck beim Schneiden des Materials in einer Schneidvorrichtung entspricht.

3. Verfahren nach Anspruch 1 oder 2, wobei die zwischen den Haltebacken (3, 4) eingespannte Messprobe (5) vor der Messung in der Fokalebene quer zur Richtung des Einschnitts (25) abgeschnitten wird.

4. Vorrichtung zum Vermessen der Restwandstärke (RW) dünner flexibler Materialien, insbesondere nach einem Verfahren gemäß den vorhergehenden Ansprüchen, wobei eine Haltevorrichtung (2) mit einander gegenüberliegenden Haltebakken (3, 4) zur Aufnahme einer Messprobe (5) des Materials, wobei die Haltebacken (3, 4) komplementär gekrümmte Auflageflächen (8, 9) aufweisen, eine Druckerzeugungseinrichtung (15) zur Aufbringung eines definierten Anpressdruckes der Haltebacken (3, 4), eine optische Vergrößerungseinrichtung mit einer Fokalebene, in der ein zu untersuchender Einschnitt (25) oder dgl. Hautschwächung des Materials positionierbar ist, und mit einer Verschiebungseinrichtung (22, 23) zur relativen Verschiebung der Haltebacken (3, 4) und der optischen Vergrößerungseinrichtung.

5. Vorrichtung nach Anspruch 4, wobei die Haltevorrichtung (2) in einer Messebene senkrecht zu der optischen Achse der Vergrößerungseinrichtung verschiebbar und/oder drehbar gelagert ist.

6. Vorrichtung nach Anspruch 4 oder 5, wobei mindestens eine der Haltebacken (4) relativ zu den übrigen Haltebacken (3) verschiebbar ist.

7. Vorrichtung nach einem der Ansprüche 4 bis 6, wobei die Haltebacken (3, 4) austauschbar sind.

8. Vorrichtung nach einem der Ansprüche 4 bis 7, wobei die optische Vergrößerungseinrichtung ein Mikroskop mit einer Strichplatte mit Fadenkreuz (27) oder dgl. Markierung aufweist.

9. Vorrichtung nach einem der Ansprüche 4 bis 8, wobei die optische Vergrößerungseinrichtung eine Lichtquelle hoher Beleuchtungsstärke, vorzugsweise 5 Mio. Lux oder mehr, umfasst, wobei die Lichtquelle auf die Messprobe (5) ausrichtbar und fokussierbar ist.

10. Vorrichtung nach einem der Ansprüche 4 bis 9, wobei ein Messer (19) oder dgl. Schneidvorrichtung insbesondere in der Fokalebene der optischen Vergrößerungseinrichtung senkrecht zur Messprobe (5) führbar ist.

11. Vorrichtung nach Anspruch 10, wobei das Messer (19) schwenkbar gelagert ist.

## Claims

1. Method of measuring the residual wall thickness (RW) of thin flexible materials following incisions or similar surface weakening not cutting completely through the material, in which a test sample (5) of the material is introduced between holding jaws (3, 4) of a holding device (2), the incision (25) is pulled open by a fixed amount by virtue of the curved shape of bearing surfaces (8, 9) of the holding jaws (3, 4), the holding jaws (3, 4) holding the test sample (5) are pressed together with an adjustable pressure, the incision (25) of the test sample (5) is positioned in the focal plane of an optical enlarger and the residual wall thickness (RW) is determined by displacing the holding jaws (3, 4) with the test sample (5) relative to the optical enlarger and determining the length of the displacement.

2. Method according to claim 1, in which the contact pressure of the holding jaws (3, 4) corresponds essentially to a holding pressure when the material is cut in a cutting device.

3. Method according to claim 1 or claim 2, in which the test sample (5) clamped between the holding jaws (3, 4) is severed transversely to the direction of the incision (25) prior to measuring in the focal plane.

4. Device for measuring the residual wall thickness (RW) of thin flexible materials, in particular by a method according to the preceding claims, in which a holding device (2) with opposing holding jaws (3, 4) for receiving a test sample (5) of the material, the holding jaws (3, 4) having complementary curved bearing surfaces (8, 9), a pressure generator (15) for applying a defined contact pressure of the holding jaws (3, 4), an optical enlarger with a focal plane in which an incision (25) or similar surface weakening of the material to be tested can be positioned and a displacement device (22, 23) for the relative displacement of the holding jaws (3, 4) and the optical enlarger are provided.

5. Device according to claim 4, in which the holding device (2) is mounted in such a manner that it can be displaced and/or rotated perpendicularly to the optical axis of the enlarger in a measuring plane.

6. Device according to claim 4 or claim 5, in which at least one of the holding jaws (4) is displaceable relative to the other holding jaws (3).

7. Device according to one of claims 4 to 6, in which the holding jaws (3, 4) are exchangeable.

8. Device according to one of claims 4 to 7, in which the optical enlarger has a microscope with a reticle with cross lines (27) or a similar marking.

9. Device according to one of claims 4 to 8, in which the optical enlarger includes a light source with high illuminance, preferably 5 million lux or more, and in which the light source can be aligned and focused relative to the test sample (5).

10. Device according to one of claims 4 to 9, in which a knife (19) or similar cutting device can be moved perpendicularly to the test sample (5), in particular in the focal plane of the optical enlarger.

11. Device according to claim 10, in which the knife (19) is pivotably mounted.

## Revendications

1. Procédé de mesure de l'épaisseur de la paroi résiduelle (RW) de matériaux flexibles minces après des incisions ne transperçant pas complètement le matériau ou d'autres affaiblissements de membrane semblables, dans lequel un échantillon de mesure (5) du matériau est placé entre les mâchoires de retenue (3, 4) d'un dispositif de fixation (2), l'incision (25) est écartée dans une mesure fixée par la forme courbée des surfaces d'appui (8, 9) des mâchoires de retenue (3, 4), les mâchoires de retenue (3, 4) tenant l'échantillon de mesure (5) sont pressées l'une contre l'autre au moyen d'une pression réglable, l'incision (25) de l'échantillon de mesure (5) est positionnée dans le plan focal d'un dispositif d'agrandissement optique et l'épaisseur de la paroi résiduelle (RW) est déterminée par déplacement des mâchoires de retenue (3, 4) avec l'échantillon de mesure (5) par rapport au dispositif d'agrandissement optique et détermination du chemin de déplacement.

2. Procédé selon la revendication 1 dans lequel la pression de serrage des mâchoires de retenue (3, 4) correspond essentiellement à une pression de retenue lors de la coupe du matériau dans un dispositif de coupe.

3. Procédé selon la revendication 1 ou 2 dans lequel l'échantillon de mesure (5) maintenu entre les mâchoires de retenue (3, 4) est coupé perpendiculairement à la direction de l'incision (25) avant la mesure dans le plan focal.

4. Dispositif pour la mesure de l'épaisseur de la paroi résiduelle (RW) de matériaux flexibles, notamment selon un procédé conforme aux revendications précédentes, avec un dispositif de fixation (2) muni de mâchoires de serrage (3, 4) opposées pour recevoir un échantillon de mesure (5) du matériau, les mâchoires de serrage (3, 4) présentant des surfaces d'appui (8, 9) courbées complémentaires, avec un dispositif pour produire une pression (15) afin d'appliquer une pression de serrage des mâchoires de retenue (3, 4) définie, avec un dispositif d'agrandissement optique avec un plan focal dans lequel une incision à examiner (25) ou un autre affaiblissement de membrane semblable du matériau peut être positionné, et avec un dispositif de déplacement (22, 23) pour le déplacement relatif des mâchoires de retenue (3, 4) et du dispositif d'agrandissement optique.

5. Dispositif selon la revendication 4 dans lequel le dispositif de fixation (2) est placé dans un plan de mesure perpendiculaire à l'axe optique du dispositif d'agrandissement de façon à pouvoir coulisser et / ou pivoter.

6. Dispositif selon la revendication 4 ou 5 dans lequel au moins l'une des mâchoires de retenue (4) est coulissante par rapport aux autres mâchoires de retenue (3).

7. Dispositif selon l'une des revendications 4 à 6 dans lequel les mâchoires de retenue (3, 4) sont interchangeables.

8. Dispositif selon l'une des revendications 4 à 7 dans lequel le dispositif d'agrandissement optique présente un microscope avec une réticule à grille muni d'un réticule (27) ou de marquages similaires.

9. Dispositif selon l'une des revendications 4 à 8 dans lequel le dispositif d'agrandissement optique comprend une source lumineuse à fort pouvoir éclairant, de préférence 5 millions de lux ou plus, la source lumineuse pouvant être orientée et focalisée sur l'échantillon de mesure (5).

10. Dispositif selon l'une des revendications 4 à 9 dans lequel un couteau (19) ou un dispositif de coupe semblable peut être guidé perpendiculairement à l'échantillon de mesure (5), notamment dans le plan focal du dispositif d'agrandissement optique.

11. Dispositif selon la revendication 10 dans lequel le couteau (19) est pivotant.
